Europäisches Patentamt

European Patent Office

Office européen des brevets

(11) Publication number: **0 426 298 A1**

# EUROPEAN PATENT APPLICATION

(21) Application number: 90310647.4

(22) Date of filing: 28.09.90

(51) Int. Cl.5: **G01P 3/488**

(30) Priority: 28.09.89 US 414097

(43) Date of publication of application:
08.05.91 Bulletin 91/19

(84) Designated Contracting States:
**DE FR GB IT**

(71) Applicant: **SSI TECHNOLOGIES, INC.**
**3330 Palmer Drive**
**Janesville, Wisconsin 53547(US)**

(72) Inventor: **Reimer, Lawrence Brian**
**2833 Dartmouth Drive**
**Janesville, Wisconsin 53545(US)**

(74) Representative: **Sanderson, Laurence Andrew**
**et al**
**SANDERSON & CO. European Patent**
**Attorneys 34, East Stockwell Street**
**Colchester Essex CO1 1ST(GB)**

(54) **Variable-reluctance magnetic sensor with multiple toothed rotating tone wheel.**

(57) A variable-reluctance magnetic speed sensor senses the speed of a rotatable axle (10). The speed sensor is disposed within the bearing housing (16) for the axle and comprises a stator (20) and a rotor (24) as well as an annular magnet (22) and an annular coil (34). The rotor is disposed on one of the bearing assemblies housing multiple pole pieces (36, 38) for alignment with multiple stator teeth.

FIG. I

## VARIABLE-RELUCTANCE MAGNETIC SENSOR WITH MULTIPLE TOOTHED ROTATING TONE WHEEL

The present invention relates to a variable-reluctance magnetic speed sensor and more particularly to a device for sensing the speed of a rotating axle.

Magnetic speed sensors are known in the art, and operate on the principle of a changing magnetic field producing a voltage signal. The approach and passing of a discontinuity, such as a gear tooth, changes the magnetic field, which induces a voltage in a coil. An example is shown in Electro Corporation Catalog Nos. 83AS103 and 83AC100, 1983, and a technical applications handbook, "Sensing and Controlling the Industrial World", Electro Corporation, 1981. Improvements in the pole piece spacings and configurations are shown in in U.S. Patent No. 4,700,133.

The present invention relates to improvements in the configuration and assembly of a variable-reluctance magnetic speed sensor and more specifically to the adaptation of such a device for monitoring and sensing the speed of a rotating axle.

According to the invention a variable-reluctance magnetic sensor comprises:

a ferrous annular stator piece having a plurality of axially extending teeth disposed about its circumference;

a ferrous annular rotor piece disposed substantially radially adjacent said stator piece and having a plurality of axially extending teeth for movement past said stator teeth during rotation of said rotor;

an annular magnet or magnet sections having a first pole on its inner diameter and a second pole on its outer diameter and disposed substantially axially adjacent said stator and rotor to create a magnetic field having flux lines extending through said stator and rotor, and

an annular coil disposed substantially radially adjacent one of said stator or rotor pieces for generating a voltage signal due to movement of said rotor teeth breaking said flux lines extending from said stator teeth.

The sensor is preferably disposed within a cylindrical ferrous bearing housing surrounding a rotatable axle with the rotor piece dispose,d radially inwardly on the stator and mounted on the axle for rotational movement therewith.

The coil is advantageously disposed radially outwardly of the stator teeth and the rotor teeth are disposed radially inwardly of the stator teeth with the bearing housing forming an outer shell with the flux lines forming a path around the coil and through the housing and the stator and the rotor teeth.

The outer diameter of the magnet is desirably in contact with an inner surface of the bearing housing.

Each of the rotor teeth will preferably extend axially beyond the stator teeth with an end of the rotor tooth substantially adjacent the magnet.

The inner diameter of the magnet will advantageously be substantially equal to the inner diameter of the stator piece.

The variable reluctance magnetic sensor of this invention is admirably suited for monitoring the rotational speed of an axle, and as thus embodied it comprises:

a cylindrical ferrous bearing housing surrounding the axle,

a ferrous annular stator piece disposed within the housing and having a plurality of axially extending teeth disposed about the inner surface of its circumference,

a ferrous annular rotor piece disposed radially inwardly of and substantially adjacent to the stator piece and mounted on the axle for rotation therewith, the rotor piece having a plurality of axially extending teeth for movement past the stator teeth during rotation of the axle,

an annular magnet or magnet sections having a first pole on its inner diameter and a second pole on its outer diameter and disposed substantially axially adjacent the stator and the rotor with its outer diameter adjacent the inner surface of the bearing housing to create a magnetic field with flux lines forming a path through the housing and the stator and the rotor teeth, and

an annular coil disposed between the stator teeth and the housing so that the flux lines form a path around the coil and a voltage signal is generated in the coil by the movement of the rotor teeth breaking the flux lines.

In order that the invention may be well understood the currently-preferred embodiment thereof will now be described in more detail, though only by way of illustration, referring to the accompanying drawings, as follows:

In the drawings:

Figure 1 is an exploded view of a bearing housing and axle embodying a variable reluctance magnetic speed sensor constructed according to the present invention;

Figure 2 is a side cross-sectional view of the assembled pieces of Figure 1;

Figure 3 is an enlarged cross-sectional view of the variable reluctance magnetic speed sensor utilized in Figure 1;

Figure 4 is a sectional view, along the line 4-4 of Figure 3, showing the rotor and stator teeth out of alignment;

Figure 5 is a view similar to that of Figure 4 with the rotor and stator teeth in alignment;

Figure 6 is a sectional view along the line 6-6 of Figure 4;

Figure 7 is a view, similar to that of Figure 3, of an alternate embodiment of the invention;

Figure 8 is a side cross-sectional view of the device utilized in an alternate form of bearing housing; and

Figure 9 is an enlarged cross-sectional view of the magnetic speed sensor utilized in the bearing housing of Figure 8.

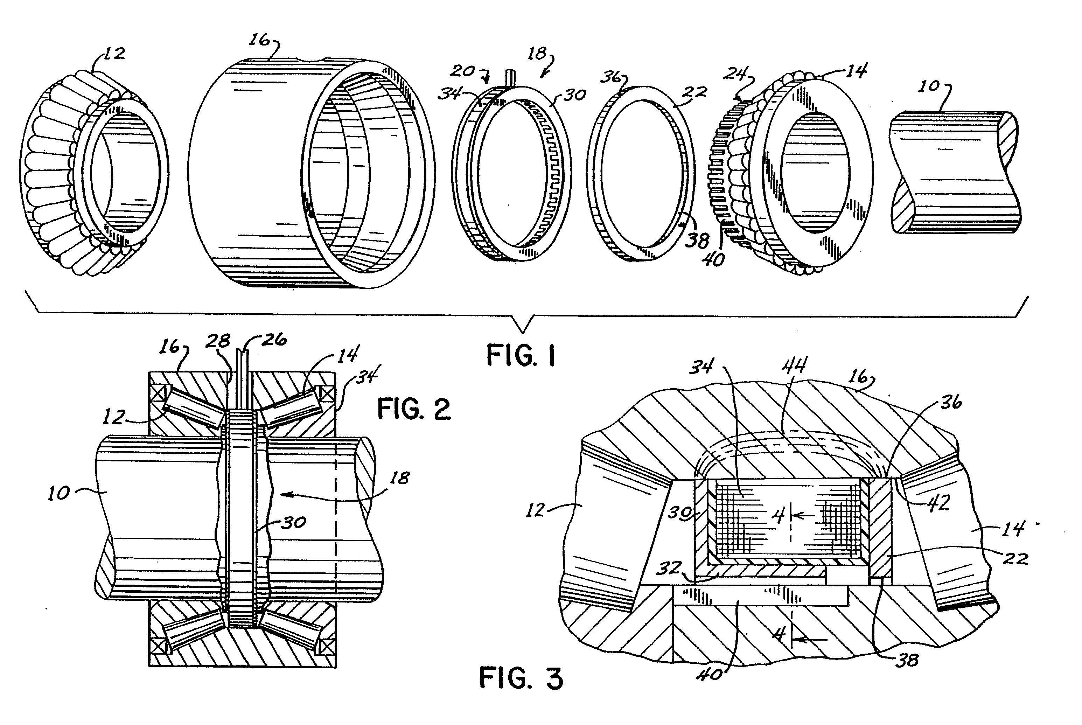

Figure 1 illustrates an exploded view of 4 rotatable axle and its associated bearing housing with a variable reluctance magnetic speed sensor disposed within the housing. As shown in Figure 1, the assembly consists of a rotatable axle 10 disposed for rotation within a pair of outer bearing assemblies 12 and 14 located within a cylindrical bearing housing 16.

Also disposed within bearing housing 16 is a variable reluctance magnetic sensor generally indicated 18, and consisting of a stator and bobbin assembly 20, an annular magnet 22 and a target wheel or rotor 24.

As shown in Figure 2, sensor 18 is disposed within cavity in bearing housing 16 with a pair of leads 26 extending outwardly from sensor 18 through an opening 28 in housing 16.

As shown in Figures 1 and 3, stator and bobbin assembly 20 includes an annular stator ring 30, of ferrous material, having a number of downwardly projecting teeth 32 on its radially inner surface. An annular wire coil form 34 is disposed radially outwardly of stator teeth 32. Annular magnet 22 is disposed axially adjacent stator and bobbin assembly 20 and is provided with a first magnetic pole on its radially outer surface 36 and a second magnetic pole on its radially inner surface 38. Annular rotor 24 is pressed fit on outer bearing assembly 14 so that it will rotate with assembly 14 and is provided with a plurality of teeth 40. Rotor 24 is disposed radially inwardly of stator ring 30 and teeth 40 align with teeth 32 on stator ring 30. Teeth 40 are configured to be somewhat longer than teeth 32 so that they extend axially closer to magnet 22. Magnet 22 has an inner diameter substantially equal to that of stator ring 30 and is provided with ar,n outer diameter that contacts an inner surface 42 of housing 16.

This results in a magnetic flux having a path that extends from the radially outer edge of magnet 22 through housing 16, through stator 30 and stator teeth 32, through rotor teeth 40 and back to the radially inner surface of magnet 22. A significant portion of the magnetic flux path is through housing 16 and is denoted in Figure 3 as 44.

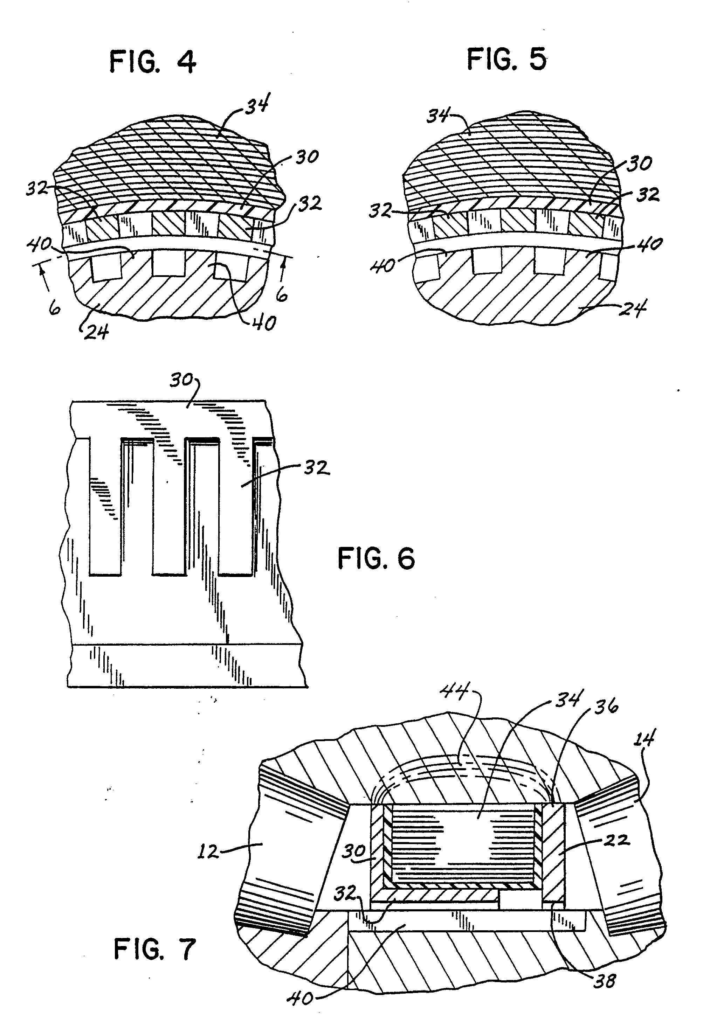

As shown in Figures 4 and 5, the flux path previously defined is intermittently interrupted during rotation of rotor 24 as rotor teeth 40 alternately align and misalign with stator teeth 32. This interruption in flux generates a voltage signal in coil 34 which can be monitored via leads 26. Both stator ring 30 and rotor 24 are provided with 52 teeth so that a single revolution of rotor 24 results in 52 voltage transitions as is typical in a conventional tangential sensor. However, due to the fact that 52 teeth are utilized in both the rotor and the stator, the output voltage is greatly enhanced by the summing of the reluctance changes over 52 discrete pole pieces. Also, eccentric motion ceases to be a problem since larger gaps in one area would be compensated by smaller gaps 180° away. This integration effect results in a signal which is proportional to the average gap rather than any changes in gap.

Figure 7 illustrates an alternate embodiment in which rotor teeth 40 have been axially extended to a point axially beyond annular magnet 22 so to enhance the strength of the magnet flux path.      .

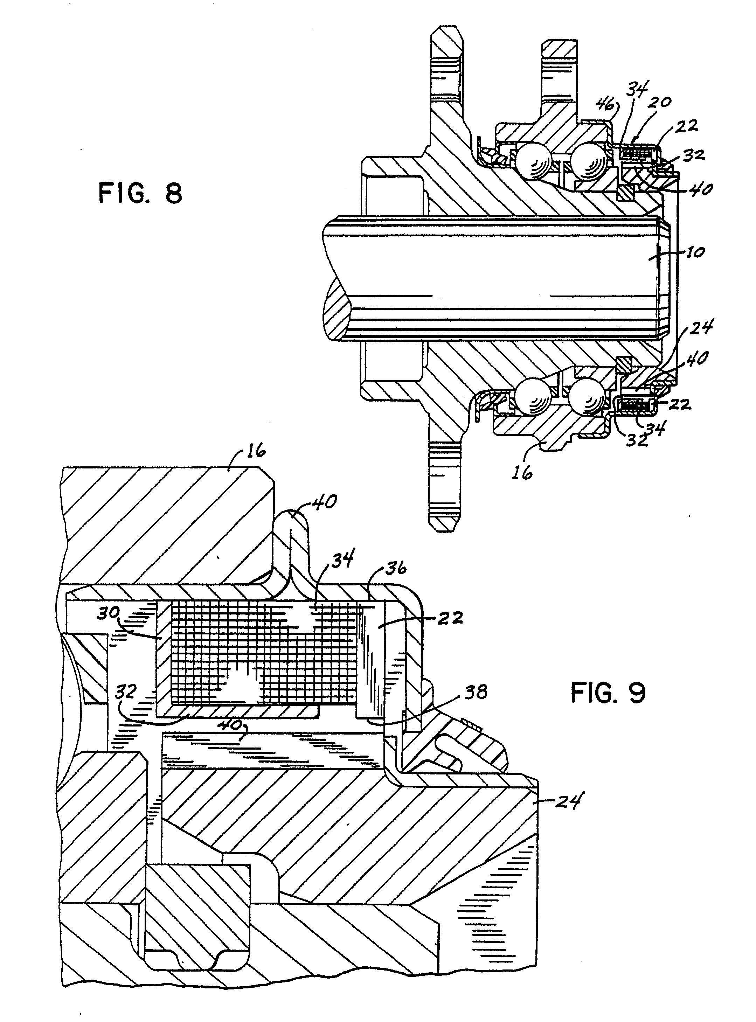

Figures 8 and 9 illustrate the use of the invention in an alternate form of bearing housing. In this embodiment, rotor 24 is attached to an end cap that is disposed on rotatable axle 10. Stator and bobbin assembly 20 are disposed radially outwardly of rotor 24 in a separate ferrous casing 46 that is attached to bearing housing 16.

In this embodiment, ferrous casing 46 is used as a portion of the magnetic flux path 44.

In operation, rotation of axle 10 causes rotation of annular rotor 24 which causes the 52 rotor teeth 40 to alternately align and misalign with the 52 stator teeth 32. The 52 resulting voltage transitions are summed and delivered to a sensor via leads 26. The monitoring and analyzation of these voltage transitions is translated into a rotational speed value for the axle.

**Claims**

1. A variable-reluctance magnetic sensor comprising:

a ferrous annular stator piece (20) having a plurality of axially extending teeth (32) disposed about its circumference:

a ferrous annular rotor piece (24) disposed substantially radially adjacent said stator piece and having a plurality of axially extending teeth (40) for movement past said stator teeth during rotation of said rotor;

an annular magnet or magnet sections (22) having a first pole (36) on its inner diameter and a second pole (38) on its outer diameter and disposed substantially axially adjacent said stator and rotor to create a magnetic field having flux lines extending through said stator and rotor; and

an annular coil (34) disposed substantially radially adjacent one of said stator or rotor pieces for generating a voltage signal due to movement of said rotor teeth breaking said flux lines extending from said stator teeth.

2. A variable reluctance magnetic sensor as claimed in claim 1, wherein said sensor is disposed within a cylindrical ferrous bearing housing (16) surrounding a rotatable axle (10) with said rotor piece disposed radially inwardly on said stator and mounted on said axle for rotational movement therewith.

3. A variable-reluctance magnetic sensor as claimed in claim 1 or claim 2, wherein said coil is disposed radially outwardly of said stator teeth and said rotor teeth are disposed radially inwardly of said stator teeth with said bearing housing forming an outer shell with said flux lines forming a path around said coil and through said housing and said stator and said rotor teeth.

4. A variable-reluctance magnetic sensor as claimed in claim 2 or in claim 3 as dependent on claim 2, wherein the outer diameter of said magnet is in contact with an inner surface of said bearing housing.

5. A variable-reluctance magnetic sensor as claimed in any of the preceding claims, wherein each of said stator piece and said rotor piece is provided with an equal number of said teeth.

6. A variable-reluctance magnetic sensor as claimed in any of the preceding claims, wherein each of said rotor teeth extends axially beyond said stator teeth with an end of said rotor tooth substantially adjacent said magnet.

7. A variable-reluctance magnetic sensor as claimed in any of the preceding claims, wherein the inner diameter of said magnet is substantially equal to the inner diameter of said stator piece.

8. A variable-reluctance magnetic sensor for monitoring the rotational speed of an axle comprising:

a cylindrical ferrous bearing housing (16) surrounding the axle;

a ferrous annular stator piece (20) disposed within said housing and having a plurality of axially extending teeth (32) disposed about the inner surface of its circumference;

a ferrous annular rotor piece (24) disposed radially inwardly of and substantially adjacent to said stator piece and mounted on the axle for rotation therewith, said rotor piece having a plurality of axially extending teeth (40) for movement past said stator teeth during rotation of the axle;

an annular magnet or magnet sections (22) having a first pole (36) on its inner diameter and a second pole (38) on its outer diameter and disposed substantially axially adjacent said stator and said rotor with its outer diameter adjacent the inner surface of said bearing housing to create a magnetic field with flux lines forming a path through said housing and said stator and said rotor teeth; and

an annular coil (34) disposed between said stator teeth and said housing so that said flux lines form a path around said coil and a voltage signal is generated in said coil by the movement of said rotor teeth breaking said flux lines.

FIG. 1

FIG. 2

FIG. 3

**FIG. 4**

**FIG. 5**

**FIG. 6**

**FIG. 7**

FIG. 8

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 065 344 (DAIMLER-BENZ) * Page 3, line 19 - page 4, line 17; figure 1 * | 1,5 | G 01 P 3/488 |
| Y | | 1-3,5,6,8 | |
| Y | US-A-3 716 788 (NISHIDA) * Column 2, lines 37-52; figure 2 * | 1-3,5,6,8 | |
| A | | 4 | |
| A | US-A-3 927 339 (PAUL et al.) * Column 3, line 63 - column 4, line 45; figures 2,3 * | 1-3,5,6,8 | |

TECHNICAL FIELDS
SEARCHED (Int. Cl.5)

G 01 P

The present search report has been drawn up for all claims

| Place of search | Date of completion of the search | Examiner |
|---|---|---|
| THE HAGUE | 15-02-1991 | JONSSON P.O. |

EPO FORM 1503 03.82 (P0401)